# EUROPÄISCHE PATENTSCHRIFT

(11) **EP 3 823 550 B1**
(45) Veröffentlichungstag und Bekanntmachung des Hinweises auf die Patenterteilung: **11.05.2022**
(21) Anmeldenummer: 19769109.0
(22) Anmeldetag: 11.09.2019
(51) Int. Cl.: A61C 5/64, B65D 81/32, A61C 5/68, A61C 5/66

(54) **MISCHKAPSEL, INSBESONDERE FÜR DEN DENTALBEREICH**
MIXING CAPSULE, IN PARTICULAR FOR THE FIELD OF DENTISTRY
CAPSULE AMALGAMÉE, EN PARTICULIER POUR LA DENTISTERIE

(30) Priorität: 12.09.2018 DE 102018122288
(43) Veröffentlichungstag der Anmeldung: 26.05.2021
(73) Patentinhaber: Kulzer GmbH, 63450 Hanau (DE)
(72) Erfinder: KEMENY, Andrea, 61381 Friedrichsdorf (DE)
(74) Vertreter: Bendele, Tanja
(86) Internationale Anmeldenummer: PCT/EP2019/074163
(87) Internationale Veröffentlichungsnummer: WO 2020/053244

(56) Entgegenhaltungen:
- DE-U1-202013 011 600
- JP-A- H0 710 172
- US-A- 3 720 523
- US-A- 3 917 062

## Beschreibung

Die vorliegende Erfindung betrifft eine Mischkapsel, insbesondere für den Dentalbereich. Aus dem Stand der Technik ist eine Vielzahl an Mischkapseln im Dentalbereich bekannt, die zum Lagern und Mischen von Zwei-Komponentenzusammensetzungen geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben. Die Mischkapseln nach dem Stand der Technik weisen in der Regel zwei durch eine Folie mit einer Sollbruchstelle getrennte Kammern auf, die jeweils eine der beiden Bestandteile der Zwei-Komponentenzusammensetzung umfassen, wobei ein Kolben vor dem Mischen diese Folie durchstößt.

DE202013011600U offenbart einen Mischbehälter, der mehrere Kammern für verschiedene zur Fertigstellung eines Mischprodukts mischbare Komponenten aufweist. Ein erstes Behälterteil und ein zweites Behälterteil sind durch Relativdrehung zueinander in eine Mischposition schwenk- und/oder drehbar, in der zum Mischen der Komponenten eine Verbindung zwischen einer ersten Kammer und einer zweiten Kammer hergestellt ist.

Nachteilig an den bekannten Mischkapseln ist, dass diese in der Regel dafür ausgelegt sind eine flüssige Monomerkomponente mit einer pulverförmigen Komponente zu vermischen. Aus dem Stand der Technik sind nahezu keine wirtschaftlich herstellbaren oder leicht zu bedienende Mischkapseln bekannt, die in der Lage sind auch zwei pastöse bis knetbare 2K-Komponenten-Zusammensetzungen miteinander zu mischen. Bevorzugte Zusammensetzungen A und B sind pastöse und thixotrope Zusammensetzungen.

Aufgabe der Erfindung war es eine Mischkapsel zu entwickeln, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Ferner bestand die Aufgabe die Mischkapsel so zu dimensionieren, dass diese in gängige Mischapparate, wie sie in Zahnarztpraxen vorhanden sind, einsetzbar ist.

Die Aufgabe der vorliegenden Erfindung wird gelöst durch eine Mischkapsel umfassend ein Gehäuse, wobei ein erster Teil des Gehäuses gegen einen zweiten Teil des Gehäuses drehbar um eine Rotationsachse gelagert ist, wobei die Rotationsachse der Längsachse des Gehäuses entspricht, wobei der erste Teil des Gehäuses mindestens eine erste Kammer zur Aufnahme einer Zusammensetzung A umfasst, wobei der zweite Teil des Gehäuses mindestens eine zweite Kammer zur Aufnahme einer Zusammensetzung B umfasst, wobei die mindestens eine erste Kammer und die mindestens eine zweite Kammer initial jeweils verschlossen sind, wobei bei Rotation des ersten Teils des Gehäuses gegen den zweiten Teil des Gehäuses um einen vordefinierten Winkel eine erste Austrittsöffnung der mindestens einen ersten Kammer im Wesentlichen kongruent über einer zweiten Austrittsöffnung der mindestens einen zweiten Kammer steht, wobei die erste Austrittsöffnung und/oder die zweite Austrittsöffnung dazu ausgebildet ist, die Zusammensetzung A in die mindestens eine zweite Kammer und/oder die Zusammensetzung B in die mindestens eine erste Kammer überführbar zu machen, insbesondere eine Überführung der jeweiligen Zusammensetzung in die jeweils andere Kammer zu ermöglichen.

Gegenüber dem Stand der Technik hat die erfindungsgemäße Mischkapsel dabei den Vorteil, dass ein räumlich getrenntes Lagern und Transportieren von mindestens Zwei-Komponenten und deren Mischung zu einer Zusammensetzung C in ein- und demselben Behältnis stattfinden kann. Ferner besteht eine gewisse Unabhängigkeit von der Konsistenz der mindestens Zwei-Komponenten: Mithilfe der erfindungsgemäßen Mischkapsel können sowohl Fluide als auch pastöse bis knetbare Zusammensetzungen miteinander vermischt werden.

Das Gehäuse der Mischkapsel entspricht in einer Ausführungsform weitestgehend einem Zylinder. Der erste Teil des Gehäuses entspricht in einer Ausführungsform einem ersten Teilzylinder des Zylinders des Gesamtgehäuses der Mischkapsel. Der zweite Teil des Gehäuses entspricht in einer Ausführungsform einem zweiten Teilzylinder des Zylinders des Gesamtgehäuses der Mischkapsel. Der erste und der zweite Teil des zylindrischen Gehäuses sind drehbar um die Längsachse des Zylinders gelagert.

Alternativ hat das Gehäuse die Form einer Kugel, eines Ellipsoids, einem Körper mit polygonem Querschnitt, einer rotationssymmetrischen Freiform oder eines Prismas. Im Falle einer Kugel ist beispielsweise der erste Teil des Gehäuses eine erste Halbkugel und der zweite Teil des Gehäuses ist eine zweite Halbkugel oder der erste Teil des Gehäuses ist eine erste Teilkugel und der zweite Teil des Gehäuses ist eine zweite Teilkugel. Im Falle eines Ellipsoids ist der erste Teil des Gehäuses ein erster Teil des Ellipsoids und der zweite Teil des Gehäuses ist ein zweiter Teil des Ellipsoids. Im Falle eines Körpers mit polygonem Querschnitt ist der erste Teil des Gehäuses ein erster Teil des Körpers mit polygonem Querschnitt und der zweite Teil des Gehäuses ist ein zweiter Teil des Körpers mit polygonem Querschnitt. Im Falle einer rotationssymmetrischen Freiform ist der erste Teil des Gehäuses ein erster Teil der rotationssymmetrischen Freiform und der zweite Teil des Gehäuses ist ein zweiter Teil der rotationssymmetrischen Freiform. Im Falle eines Prismas ist der erste Teil des Gehäuses ein erster Teil des Prismas und der zweite Teil des Gehäuses ist ein zweiter Teil des Prismas. Denkbar sind auch Mischformen zur Bildung des Gehäuses. So kann in einer weiteren Ausführungsform der erste Teil des Gehäuses ein Prisma sein und der zweite Teil des Gehäuses beispielsweise eine Halbkugel.

Die mindestens eine erste Kammer des ersten Teils des Gehäuses und die mindestens eine zweite Kammer des zweiten Teils des Gehäuses sind im Auslieferungszustand initial beispielsweise durch eine Folie an der ersten Austrittsöffnung bzw. an der zweiten Austrittsöffnung verschlossen. Diese Folie lässt sich beim Mischvorgang leicht durchbrechen. Alternativ kann an der ersten und/oder zweiten Austrittsöffnung eine Sollbruchstelle vorliegen. Sowohl die erste als auch die zweite Kammer liegen vorzugsweise als Sackloch vor und weisen somit nur einseitig eine Öffnung in Form der jeweiligen Austrittsöffnung auf. Die erste und die zweite Austrittsöffnung sind vorzugsweise identisch ausgebildet.

Der vordefinierte Winkel, um den der erste Teil des Gehäuses gegen den zweiten Teil des Gehäuses drehbar ist, ergibt sich aus der relativen Anordnung von erster Austrittsöffnung im ersten Teil des Gehäuses und zweiter Austrittsöffnung im zweiten Teil des Gehäuses

Kongruenz bedeutet in der Geometrie die Deckungsgleichheit von Punktmengen. Kongruente Stellung von erster Austrittsöffnung und zweiter Austrittsöffnung bedeutet demnach, dass die erste Austrittsöffnung und zweite Austrittsöffnung im Wesentlichen deckungsgleich übereinander liegen. Ausreichend, aber suboptimal, ist auch eine teilweise Überlappung von erster Austrittsöffnung und zweiter Austrittsöffnung.

Die erfindungsgemäße Mischkapsel mit Kapselgehäuse weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gemeinsame Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³.

In einer weiteren Ausführungsform ist vorgesehen, dass bei im Wesentlichen kongruenter Stellung von der ersten Austrittsöffnung mit der zweiten Austrittsöffnung die mindestens eine erste Kammer und die mindestens eine zweite Kammer eine gemeinsame Mischkammer bilden, wobei in der gemeinsamen Mischkammer die Zusammensetzung A und die Zusammensetzung B mischbar zur Zusammensetzung C gelagert sind und durch Bewegung der Mischkapsel zur Zusammensetzung C vermischt werden.

Die Mittelachsen der mindestens einen ersten Kammer und der mindestens einen zweiten Kammer liegen bei kongruenter Stellung der ersten und zweiten Austrittsöffnung koaxial in einer Linie, sodass die mindestens eine erste Kammer und die mindestens eine zweite Kammer ein gemeinsames Lumen bilden, also eine gemeinsame Mischkammer. So wird vorhandener Lagerraum effizient für ein Mischen der Zusammensetzungen A und B genutzt. Ein zusätzliches Volumen ist für den Mischvorgang nicht erforderlich.

Liegen in einer Ausführungsform beispielsweise eine dritte Kammer mit einer Zusammensetzung D und eine vierte Kammer mit der Zusammensetzung E vor, so kann es bei kongruenter Stellung von einer dritten und vierten Austrittsöffnung zur Ausbildung einer weiteren gemeinsamen Mischkammer kommen, in der beispielsweise die Zusammensetzung D und die Zusammensetzung E zur Zusammensetzung F vermischt werden. Je nach Größe der Mischkapsel kann der erste Teil des Gehäuses eine Vielzahl erster Kammern und der zweite Teil des Gehäuses eine Vielzahl von zweiten Kammern aufweisen, die bei kongruenter Stellung zueinander eine Vielzahl von gemeinsamen Mischkammern bilden.

In einer weiteren Ausführungsform ist vorgesehen, dass der erste Teil des Gehäuses mindestens einen ersten Magnet umfasst und der zweite Teil des Gehäuses mindestens einen zweiten Magnet umfasst, wobei der mindestens eine erste Magnet und der mindestens eine zweite Magnet bei kongruenter Stellung zueinander dazu ausgebildet sind, den ersten Teil des Gehäuses und den zweiten Teil des Gehäuses zu dem Gehäuse zusammenzuhalten.

In vorteilhafter Weise ist der erste Teil des Gehäuses trennbar mit dem zweiten Teil des Gehäuses verbunden. Die relative Stellung von erstem Teil und zweitem Teil des Gehäuses zueinander kann schnell und ohne viel Kraftaufwand geändert werden. Auch kann der erste und/oder der zweite Teil des Gehäuses gegen andere kompatible erste und/oder zweite Teile von anderen Mischkapseln desselben Typs ausgetauscht werden. Somit bleibt das ganze Mischsystem jederzeit flexibel.

Statt der Verwendung von Magneten sind auch andere Mechanismen denkbar, die einen Zusammenhalt von erstem und zweitem Teil des Gehäuses bewirken, so z.B. ein Schnappverschluss oder ein Schienensystem mit Einrastmechanismus.

Der mindestens eine erste Magnet und der mindestens eine zweite Magnet können in einer Ausführungsform Permanentmagneten sein. Permanentmagneten weisen ein statisches Magnetfeld auf. Solche Permanentmagneten weisen einen Anteil aus Eisen, Nickel, Kobalt auf und/oder sind Legierungen umfassend mindestens eines der vorgenannten Metalle.

Die Anzahl der Magneten pro erstem Teil des Gehäuses und pro zweitem Teil des Gehäuses ist variierbar und hängt weitestgehend von der Form des Gehäuses der Mischkapsel ab.

In einer weiteren Ausführungsform umfassen der mindestens eine erste Magnet und der mindestens eine zweite Magnet Neodym.

Neodym Magneten weisen in vorteilhafter Weise die notwendige Stärke zum Zusammenhalt von erstem und zweitem Teil des Gehäuses auf. Auch bei Erschütterungen beim Transport und beim Mischen während der Mischphase sind Neodym Magneten stark genug, um den ersten und zweiten Teil des Gehäuses zusammenzuhalten.

Neodym ist ein chemisches Element mit dem Elementsymbol Nd und der Ordnungszahl 60. Im Periodensystem steht es in der Gruppe der Lanthanoide und zählt damit auch zu den Metallen der Seltenen Erden. Das Metall wird in Form der Legierung Neodym-Eisen-Bor für starke Permanentmagnete verwendet.

In einer weiteren Ausführungsform umfassen der mindestens eine erste Magnet und der mindestens eine zweite Magnet Samarium-Cobalt.

Samarium-Cobalt (abgekürzt SmCo) ist eine Legierung des Seltenerdmetalls Samarium (Sm) mit dem Metall Cobalt (Co). Für die Verwendung als Permanentmagnet sind zwei Kristallstrukturen geeignet: SmCo₅, ohne zusätzliche Legierungselemente, und Sm₂Co₁₇ mit Eisen, Kupfer und Zirkon als zusätzliche Legierungselemente.

In einer weiteren Ausführungsform ist vorgesehen, dass nach einer Trennung des ersten Teils des Gehäuses vom zweiten Teil des Gehäuses die mindestens eine erste Kammer und/oder die mindestens eine zweite Kammer dazu ausgebildet sind, die Zusammensetzung C aufzunehmen.

Die mindestens eine erste Kammer und/oder die mindestens eine zweite Kammer sind räumlich so großzügig bemessen, dass jede Kammer für sich die Zusammensetzung C, also das Produkt aus Zusammensetzung A und Zusammensetzung B, aufnehmen kann. Trennt man den ersten Teil vom zweiten Teil des Gehäuses, so kann in einem der beiden Teile das Mischprodukt, die Zusammensetzung C, bereitgestellt werden. Dies erhöht die Benutzerfreundlichkeit des Mischsystems.

Die erste Mischkammer und/oder die zweite Mischkammer haben in einer Ausführungsform die Form eines Hohlzylinders. In einer weiteren Ausführungsform haben die erste Mischkammer und/oder die zweite Mischkammer die Form einer Halbkugel. Das Lumen von erster Mischkammer und/oder zweiter Mischkammer ist beliebig gestaltbar, solange es geeignet ist, die Zusammensetzung A bzw. B zu lagern und das Mischprodukt, die Zusammensetzung C benutzerfreundlich zur Verfügung zu stellen.

In einer weiteren Ausführungsform umfassen die mindestens eine erste Kammer und/oder die mindestens eine zweite Kammer ein begrenztes Lumen.

Dadurch können in vorteilhafter Weise in einer Mischkapsel die Neodym Magneten frei von den Zusammensetzungen A, B und C gehalten werden. Es kommt nicht zu Verschmierungen innerhalb der Mischkapsel. Auch ist eine dritte und vierte Kammer denkbar, in denen eine Zusammensetzung D bzw. E lagern. Bei einer Vielzahl von ersten Kammern des ersten Teils des Gehäuses und einer Vielzahl von zweiten Kammern des zweiten Teils des Gehäuses kann eine Vielzahl von gemeinsamen Mischkammern erzeugt werden, sodass eine Multi-Komponenten Mischkapsel realisierbar erscheint.

In einer weiteren Ausführungsform ist vorgesehen, dass der vordefinierte Winkel der Rotation des ersten Teils des Gehäuses gegen den zweiten Teil des Gehäuses, damit eine erste Austrittsöffnung der mindestens einen ersten Kammer kongruent über einer zweiten Austrittsöffnung der mindestens einen zweiten Kammer steht, ein Winkel zwischen 0 und 360 Grad ist, insbesondere 90 Grad, 180 Grad oder 270 Grad beträgt.

Dadurch können in vorteilhafter Weise verschiedene relative Stellungen des ersten und des zweiten Teils des Gehäuses zueinander realisiert werden, indem sie gegeneinander um die Längsachse des Gehäuses gedreht werden. Der Zusammenhalt des ersten und des zweiten Teils des Gehäuses ist jeweils am stärksten, wenn erste Magnete des ersten Teils des Gehäuses kongruent zu zweiten Magneten des zweiten Teils des Gehäuses stehen.

Der vordefinierte Winkel der Rotation des ersten Teils des Gehäuses gegen den zweiten Teil des Gehäuses hängt von der Anordnung und Anzahl der ersten Magneten auf dem ersten Teil des Gehäuses und von der Anordnung und Anzahl der zweiten Magneten auf dem zweiten Teil des Gehäuses ab.

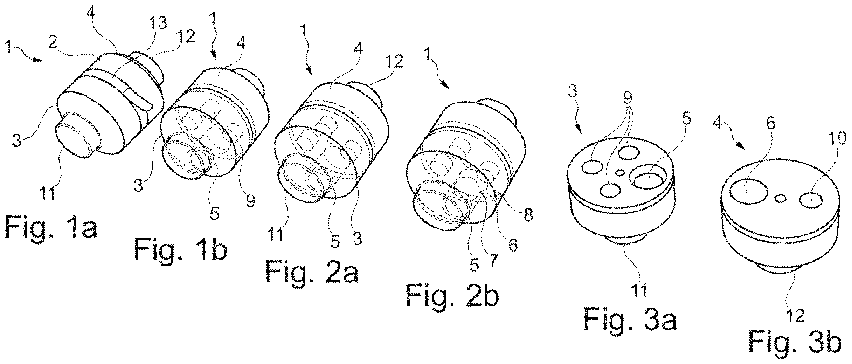

In einer Ausführungsform (Fig. 3a und Fig. 3b) sind auf dem ersten Teil des Gehäuses drei Magnete angeordnet, wobei die drei ersten Magneten und die erste Kammer jeweils in einem Winkel um 90 Grad beabstandet sind. Auf dem zweiten Teil des Gehäuses befindet sich lediglich ein zweiter Magnet und eine zweite Kammer, wobei der zweite Magnet und die zweite Kammer in einem Winkel um 180 Grad zu einander beabstandet sind. Um Kongruenz zwischen den ersten Magneten und dem zweiten Magneten zu erhalten, kann der zweite Teil des Gehäuses gegen den ersten Teil des Gehäuses um 90 Grad, 180 Grad oder um 270 Grad gedreht werden. Um in der Mischphase Kongruenz zwischen der ersten Austrittsöffnung der ersten Kammer und der zweiten Austrittsöffnung der zweiten Kammer zu erhalten, ist jedoch nur eine relative Position zwischen erstem Teil des Gehäuses und zweitem Teil des Gehäuses relevant. Für die Lagerungs- und Transportphase stehen drei relative Stellungen zur Verfügung, in denen einer der ersten Magnete des ersten Teils des ersten Gehäuses kongruent zum zweiten Magneten des zweiten Teils des Gehäuses steht, nicht aber die erste und zweite Austrittsöffnung zueinander.

Der vordefinierte Winkel der Rotation des ersten Teils des Gehäuses gegen den zweiten Teil des Gehäuses hängt vor allem von der Ausgangsposition der relativen Stellung von erstem und zweiten Teil des Gehäuses ab. Somit kann sich jeder Winkel zwischen 0 und 360 Grad ergeben, um Kongruenz zwischen erstem und zweitem Magneten bzw. Kongruenz zwischen erster und zweiter Austrittsöffnung zu erlangen.

In einer weiteren Ausführungsform ist vorgesehen, dass bei einer kongruenten Stellung von erster Austrittsöffnung und zweiter Austrittsöffnung die mindestens eine erste Kammer und die mindestens eine zweite Kammer kommunizierend miteinander in Verbindung stehen.

Die erste und die zweite Austrittsöffnung sind initial durch eine Folie verschlossen. Stehen die erste und die zweite Austrittsöffnung kongruent übereinander, so kann durch bloßes Mischen die jeweilige Folie leicht durchbrochen werden, sodass die mindestens eine erste Kammer und die mindestens eine zweite Kammer kommunizierend miteinander in Verbindung stehen. Dadurch kann die Zusammensetzung A der ersten Kammer des ersten Teils des Gehäuses in die zweite Kammer des zweiten Teils des Gehäuses überführt werden. Andererseits kann die Zusammensetzung B der zweiten Kammer des zweiten Teils des Gehäuses in die erste Kammer des ersten Teils des Gehäuses überführt werden. Es kommt somit zur Bildung einer gemeinsamen Mischkammer, in der die Zusammensetzung A und die Zusammensetzung B zur Zusammensetzung C vermischt werden. Die erste und/oder zweite Kammer sind als Teile des herstellbaren gesamten Mischraumes zu verstehen und können den gesamten Mischraum bilden, in dem vorzugsweise die Mischung erfolgt.

In einer weiteren Ausführungsform weist der erste Teil des Gehäuses an seiner dem zweiten Teil des Gehäuses abgewandten Seite eine erste Erhöhung auf und der zweite Teil des Gehäuses weist an seiner dem ersten Teil abgewandten Seite eine zweite Erhöhung auf. Die jeweilige Erhöhung kann als Nocke oder Vorsprung ausgebildet sein. Bevorzugt weist in dieser der erste Teil des Gehäuses an seiner dem zweiten Teil des Gehäuses abgewandten Seite einen ersten Zylinder auf und der zweite Teil des Gehäuses weist an seiner dem ersten Teil abgewandten Seite einen zweiten Zylinder auf.

Bei einer Trennung von erstem Teil und zweitem Teil des Gehäuses ist jedes der einzelnen Teile standfähig, wodurch das Mischprodukt, die Zusammensetzung C, in vorteilhafter Weise für den Nutzer bereitgestellt wird. Ferner dienen die Zylinder einem Einspannen der Mischkapsel in eine Mischapparatur. Der Abstand zwischen erstem und zweitem Zylinder ist so bemessen, dass die Mischkapsel in bekannte kommerzielle Mischapparaturen synonym zu Universalmischgerät kompatibel eingespannt werden kann. Auch für ein manuelles Mischen in der Hand eignen sich der erste und zweite Zylinder, da so die Mischkapsel in vorteilhafter Weise zwischen Daumen und Finger positioniert werden kann.

Statt Zylinderform sind auch andere Körperformen denkbar, so beispielsweise die Form einer Halbkugel, eines halben Ellipsoids, eines Würfels, eines Quaders und/oder eines Prismas.

In einer weiteren Ausführungsform besteht der erste Teil des Gehäuses und/oder der zweite Teil des Gehäuses aus einem opaken Material.

Dadurch kann in vorteilhafter Weise der Mischvorgang in der gemeinsamen Mischkammer beobachtet werden. Außerdem sieht man, wie weit man den ersten Teil des Gehäuses gegen den zweiten Teil des Gehäuses drehen muss, damit erste und zweite Austrittsöffnung kongruent übereinander liegen. Ferner sieht man die Magneten und weiß, wie weit man den ersten Teil des Gehäuses gegen den zweiten Teil des Gehäuses drehen muss, damit erste und zweite Magneten kongruent zueinander stehen.

Opake Materialien sind beispielsweise Acrylglas (chemisch Polymethylmethacrylat, Kurzzeichen PMMA) oder andere transparente Kunststoffe wie thermoplastische Polyester, Polycarbonat oder Polystyrol-Kunststoffe.

Alternativ ist der erste und/oder zweite Teil des Gehäuses nicht opak. Das Material aus dem die Einzelteile der Mischkapsel, wie das Kapselgehäuse und die Zylinder, dann bestehen umfasst vorzugsweise einen tribologisch modifizierten Kunststoff, wie PBT-POM; Polybutylenterephthalat (PBT), Polyoxymethylen (POM), sowie Kunststoffe umfassend organische und/oder anorganische Füllstoffe, wie bspw. die folgenden Additive, wie Silikonöl, Grafit (GR), Fluorkohlenstoff (TF), Kohlenstofffasern (CF), MoS2 (MO), Polyolefinwaxen oder andere Festschmierstoffe. Ebenfalls geeignete Materialien zur Herstellung der vorgenannten Kapselbestandteile können ausgewählt sein aus einem polymeren Material, gefülltem polymeren Material, einem Faserverstärktem Polymer, Hybridmaterial, wobei das polymere Material ausgewählt sein kann aus Polyamid, Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen), PEK (Polyether-ketonen); PEKK (Poly(etherketonketonen)), PEEEK (Poly(etheretheretherketonen)), PEEKK (Poly(etheretherketonketonen)), PEKEKK (Poly(etherketonetherketonketonen); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylenethynylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenz-imidazolen).

In einer weiteren Ausführungsform umfasst das Gehäuse der Mischkapsel Cycloolefinpolymer, Cycloolefin-Copolymere, Polyethylen, Polypropylen, Polyethylen mit geringer Dichte (LDPE), Polyethylen mit hoher Dichte (HDPE), Polypropylen mit geringer Dichte (LDPP), Polypropylen mit hoher Dichte (HDPP) und/oder Mischungen enthaltend mindestens eines dieser Polymere.

Cycloolefin-Copolymere weisen eine hohe Steifigkeit, Festigkeit und Härte sowie niedrige Dichte und hohe Transparenz bei guter Säure- und Laugenbeständigkeit auf. Hervorzuheben ist die äußerst geringe Wasseraufnahme/Wasserdampfdurchlässigkeit. Alle PolyethylenTypen zeichnen sich durch hohe chemische Beständigkeit, gute elektrische Isolationsfähigkeit und ein gutes Gleitverhalten aus.

PE-HD (HDPE): Schwach verzweigte Polymerketten, daher hohe Dichte zwischen 0,94 g/cm3 und 0,97 g/cm³, ("HD" steht für "high density"). PE-LD (LDPE): Stark verzweigte Polymerketten, daher geringe Dichte zwischen 0,915 g/cm³ und 0,935 g/cm³, ("LD" steht für "low density"). Hohe Kristallinität der Polymere führt zu hoher Dichte, Steifigkeit, Härte, Abriebfestigkeit, Gebrauchstemperatur und Chemikalienbeständigkeit. Polyethylen besitzt eine hohe Beständigkeit gegen Säuren, Laugen und weitere Chemikalien. Polyethylen nimmt kaum Wasser auf. Die Gas- und Wasserdampfdurchlässigkeit (nur polare Gase) ist niedriger als bei den meisten Kunststoffen; Sauerstoff, Kohlendioxid und Aromastoffe lässt es hingegen gut durch. Die Eigenschaften von Polypropylen ähneln Polyethylen; es ist jedoch etwas härter und wärmebeständiger.

In einer weiteren Ausführungsform weist die Mischkapsel einen Erstöffnungsschutz auf, wobei der Erstöffnungsschutz dazu ausgebildet ist, den ersten Teil des Gehäuses gegen den zweiten Teil des Gehäuses rotationsfrei zu fixieren. Des Weiteren ist es bevorzugt, dass der Erstöffnungsschutz die Mischkapsel feuchtigkeitsdicht und/oder luftdicht verschließt.

Dadurch werden in vorteilhafter Weise der erste und der zweite Teil der Mischkapsel beim Transport und bei der Lagerung zusammengehalten. Nach der Auslieferung und vor der Gebrauchsphase kann der Erstöffnungsschutz leicht entfernt werden.

In einer Ausführungsform ist der Erstöffnungsschutz ein Klebeband, welches den ersten und den zweiten Teil des Gehäuses gürtelartig auf der Mantelfläche umgreift. In einer weiteren Ausführungsform ist der Erstöffnungsschutz eine Folie, welche den ersten und den zweiten Teil des Gehäuses allumfassend umgibt. Auch eine Versiegelung ist denkbar.

In einer weiteren Ausführungsform betrifft die Erfindung ein Verfahren zum Mischen von mindestens zwei Zusammensetzungen A und B zu einer Zusammensetzung C in einer Mischkapsel, wobei das Verfahren die Schritte umfasst:
Optional Bereitstellen einer Mischkapsel in der der erste Teil des Gehäuses gegen den zweiten Teil des Gehäuses so angeordnet ist, dass a) die erste Austrittsöffnung der mindestens einen ersten Kammer nicht über der zweiten Austrittsöffnung der mindestens einen zweiten Kammer steht; oder b) die erste Kammer umfassend die Zusammensetzung A und die zweite Kammer umfassend die Zusammensetzung B jeweils verschlossen sind, und optional entfernen des Erstöffnungsschutzes,
(i) Drehen des ersten Teils des Gehäuses gegen den zweiten Teil des Gehäuses, solange bis die erste Austrittsöffnung der mindestens einen ersten Kammer kongruent über der zweiten Austrittsöffnung der mindestens einen zweiten Kammer steht;
(ii) Mischen der Zusammensetzung A und der Zusammensetzung B in der gemeinsamen Mischkammer, indem die Mischkapsel bewegt wird;
(iii) Trennen des ersten Teils des Gehäuses vom zweiten Teil des Gehäuses;
(iv) Erhalt der Zusammensetzung C in der ersten Kammer und/oder in der zweiten Kammer.

Wird die Mischkapsel in ihrem Auslieferungszustand bereitgestellt, ist als Erstes ein Öffnen des Erstöffnungsschutzes der Mischkapsel notwendig. Dabei kann das Klebeband einfach von der Mischkapsel entfernt werden. Nun werden der erste und der zweite Teil des Gehäuses nur noch durch die ersten und zweiten Magnete zusammengehalten und die relative Stellung zwischen erstem und zweitem Teil des Gehäuses kann durch Drehen des ersten Teils des Gehäuses gegen den zweiten Teil des Gehäuses leicht verändert werden.

Gegenstand der Erfindung ist somit ein Verfahren zum Mischen von mindestens zwei Zusammensetzungen A und B zu einer Zusammensetzung C in der erfindungsgemäßen Mischkapsel, insbesondere von pastösen, knetbaren bis festen, vorzugsweise thixotropen Zusammensetzungen, besonders bevorzugt von dentalen Zusammensetzungen.

In einer weiteren Ausführungsform wird das (iii) Mischen der Zusammensetzung A und der Zusammensetzung B in der gemeinsamen Mischkammer von einem Universalmischgerät für Dentalmaterialien durchgeführt. Das Mischen erfolgt in der Regel über eine periodische Schüttelbewegung entlang der Längsachse in einem Universalmischgerät.

Der Mischvorgang kann mittels eines bekannten kommerziellen Mischgeräts, z.B. 3M-ESPE-CAPMIX, durchgeführt werden, indem die Mischkapsel in die vorgesehene Halterung des Mischgeräts eingespannt wird. Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt. Alternativ ist eine manuelle Mischung möglich.

In einer weiteren Ausführungsform betrifft die Erfindung eine Verwendung einer Mischkapsel zum Lagern, Mischen und Anwenden von pastösen bis knetbaren dentalen Zwei-Komponenten Zusammensetzungen.

Alternativ kann in einer Ausführungsform, in der die Mischkapsel eine Vielzahl von gemeinsamen Mischkammern aufweist, die Mischkapsel zum Lagern, Mischen und Anwenden von pastösen bis knetbaren dentalen Multi-Komponenten Zusammensetzungen verwendet werden. Die Mischkapsel kann auch zum Lagern, Mischen und Anwenden von Fluiden, Pulvern und Flüssigkeiten verwendet werden. Es wurde somit eine Mischkapsel entwickelt, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Die mischbaren Zusammensetzungen sind vorzugsweise thixotrope dentale Zusammensetzungen.

Gleichfalls Gegenstand der Erfindung ist ein Kit umfassend eine Mischkapsel nach einem umfassend eine Zusammensetzung A und eine Zusammensetzung B.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Figurenbeschreibung

**Fig. 1a** zeigt die erfindungsgemäße Mischkapsel **1** mit einem Erstöffnungsschutz **13.**
**Fig. 1b** zeigt die erfindungsgemäße Mischkapsel **1** mit transparentem ersten Teil des Gehäuses **3.**
**Fig. 2a** zeigt dasselbe wie Fig. 1b.
**Fig. 2b** zeigt die Zusammensetzungen A und B in der ersten Kammer 5.
**Fig. 3a** zeigt den ersten Teil des Gehäuses **3** nach der Trennung vom zweiten Teil des Gehäuses **4.**
**Fig. 3b** zeigt den zweiten Teil des Gehäuses **4** nach der Trennung vom ersten Teil des Gehäuses **3.**

### Ausführungsformen der Erfindung

In der in den **Figuren 1a** bis **3b** gezeigten Ausführungsform hat das Gehäuse der Mischkapsel 1 im Wesentlichen die Form eines Zylinders. Die Mischkapsel in den **Figuren 1a** bis **3b** besitzt somit ein zylindrisches Gehäuse. Auf diese Ausführungsform bezieht sich die folgende Beschreibung der Mischkapsel.

**Fig. 1a** zeigt die erfindungsgemäße Mischkapsel **1** mit einem Erstöffnungsschutz **13.** Der Erstöffnungsschutz **13** ist dazu ausgebildet, einen ersten Teil des zylindrischen Gehäuses **3** der Mischkapsel **1** gegen einen zweiten Teil des zylindrischen Gehäuses **4** der Mischkapsel **1** rotationsfrei zu fixieren. In der Ausführungsform der **Fig. 1a** ist der Erstöffnungsschutz ein Klebeband, welches gürtelartig um die Mantelfläche des zylindrischen Gehäuses **2,** dort wo der erste Teil des zylindrischen Gehäuses **3** und der zweite Teil des zylindrischen Gehäuses **4** aneinandergrenzen, angeordnet ist. Das zylindrische Gehäuse **2** der Mischkapsel **1** weist an seiner Grundfläche einen ersten Zylinder **11** und an seiner Deckfläche einen zweiten Zylinder **12** auf, wobei mittels der jeweiligen Zylinder **11, 12** der erste Teil des zylindrischen Gehäuses **3** und/oder der zweite Teil des zylindrischen Gehäuses **4** standfähig sind. Der erste und der zweite Zylinder **11, 12** dienen insbesondere einem Einspannen der

Mischkapsel in die Halterung einer Mischapparatur, mit welcher der Mischvorgang durchgeführt wird.

**Fig. 1b** zeigt die erfindungsgemäße Mischkapsel **1** mit transparentem ersten Teil des zylindrischen Gehäuses **3.** Der erste Teil des zylindrischen Gehäuses umfasst mindestens eine erste Kammer **5** zur Aufnahme einer Zusammensetzung A. Dabei kann die erste Kammer ein Lumen aufweisen, welches einem miniaturisierten Reagenzglas ähnlich ist. In der in **Fig. 1b** dargestellten Ausführungsform weist die erste Kammer **5** an der Grenzfläche zum zweiten Teil des zylindrischen Gehäuses **4** drei erste Neodym Magneten **9** auf, welche jeweils um 90 Grad bzw. 180 Grad versetzt auf einem gedachten Kreis parallel zur Deck- und Grundfläche angeordnet sind. Mindestens einer der drei ersten Neodym Magneten **9** des ersten Teils des zylindrischen Gehäuses **3** ist kongruent über mindestens einen zweiten Neodym Magneten **10** des zweiten Teils des zylindrischen Gehäuses **4** angeordnet, sodass der erste Teil des zylindrischen Gehäuses **3** und der zweite Teil des zylindrischen Gehäuses **4** zusammengehalten werden und die Mischkapsel **1** verschlossen ist.

**Fig. 2a** zeigt dasselbe wie Fig. 1b. Die erste Kammer **5** des ersten Teils des zylindrischen Gehäuses **3** ist räumlich getrennt von der zweiten Kammer **6** des zweiten Teils des zylindrischen Gehäuses **4.** Der erste Teil des zylindrischen Gehäuses **3** wird nun gegen den zweiten Teil des zylindrischen Gehäuses **4** um die Längsachse des zylindrischen Gehäuses **2** herum, insbesondere um 90 Grad oder 180 Grad oder 270 Grad gedreht, sodass eine erste Austrittsöffnung **7** der mindestens einen ersten Kammer **5** kongruent über einer zweiten Austrittsöffnung **8** der mindestens einen zweiten Kammer **6** steht. Bei kongruenter Stellung von erster Austrittsöffnung **7** und zweiter Austrittsöffnung **8** stehen die mindestens eine erste Kammer **5** des ersten Teils des zylindrischen Gehäuses **3** und die mindestens eine zweite Kammer **6** des zweiten Teils des zylindrischen Gehäuses **4** kommunizierend miteinander in Verbindung. Durch Hin- und Herbewegen der Mischkapsel **1** kann die Zusammensetzung A der ersten Kammer **5** in die zweite Kammer **6** überführt werden und/oder die Zusammensetzung B der zweiten Kammer **6** in die erste Kammer **5** überführt werden. Dieser Zustand ist in **Fig. 2b** dargestellt. Erste Austrittsöffnung **7** und zweite Austrittsöffnung **8** liegen kongruent übereinander und Zusammensetzung B der zweiten Kammer **6** ist in die erste Kammer **5** hinein befördert worden. Durch Hin- und Herbewegen der Mischkapsel werden die Zusammensetzung A und die Zusammensetzung B zur Zusammensetzung C vermischt. Um die Zusammensetzung C der Mischkapsel **1** zu entnehmen, ist eine Trennung des ersten Teils des zylindrischen Gehäuses **3** vom zweiten Teil des zylindrischen Gehäuses **4** erforderlich. Durch Drehen des ersten Teils des zylindrischen Gehäuses **3** gegen den zweiten Teil des zylindrischen Gehäuses **4,** so dass mindestens einer der drei ersten Neodym Magneten **9** des ersten Teils des zylindrischen Gehäuses **3** nicht kongruent über mindestens einen zweiten Neodym Magneten **10** des zweiten Teils des zylindrischen Gehäuses **4** angeordnet ist, kann die Trennung des ersten Teils des zylindrischen Gehäuses **3** vom zweiten Teil des zylindrischen Gehäuses **4** erleichtert werden.

**Fig. 3a** zeigt den ersten Teil des zylindrischen Gehäuses **3** nach der Trennung vom zweiten Teil des zylindrischen Gehäuses **4.** Der erste Teil des zylindrischen Gehäuses **3** steht auf dem ersten Zylinder **11.** Die Zusammensetzung C befindet sich in der ersten Kammer **5.** Auf der Grenzfläche sind drei erste Neodym Magneten **9** angeordnet. Die erste Kammer **5** und die drei ersten Neodym Magneten **9** sind auf einem gedachten Kreis angeordnet, wobei der Winkelabstand zwischen den drei ersten Neodym Magneten **9** und der ersten Kammer **5** jeweils 90 Grad beträgt.

**Fig. 3b** zeigt den zweiten Teil des zylindrischen Gehäuses **4** nach der Trennung vom ersten Teil des zylindrischen Gehäuses **3.** Der zweite Teil des zylindrischen Gehäuses **3** steht auf dem zweiten Zylinder **12.** Die Zusammensetzung B befindet sich nicht mehr in der zweiten Kammer **6.** Auf der Grenzfläche ist ein zweiter Neodym Magnet **10** angeordnet. Die zweite Kammer **6** und der zweite Neodym Magnet **10** sind auf einem gedachten Kreis angeordnet, wobei der Winkelabstand zwischen dem zweiten Neodym Magneten **10** und der zweiten Kammer **6** jeweils 180 Grad beträgt.

Alternativ hat das Gehäuse die Form einer Kugel, eines Ellipsoids, einem Körper mit polygonem Querschnitt, einer rotationssymmetrischen Freiform oder eines Prismas. Im Falle einer Kugel ist beispielsweise der erste Teil des Gehäuses eine erste Halbkugel und der zweite Teil des Gehäuses ist eine zweite Halbkugel oder der erste Teil des Gehäuses ist eine erste Teilkugel und der zweite Teil des Gehäuses ist eine zweite Teilkugel. Im Falle eines Ellipsoids ist der erste Teil des Gehäuses ein erster Teil des Ellipsoids und der zweite Teil des Gehäuses ist ein zweiter Teil des Ellipsoids. Im Falle eines Körpers mit polygonem Querschnitt ist der erste Teil des Gehäuses ein erster Teil des Körpers mit polygonem Querschnitt und der zweite Teil des Gehäuses ist ein zweiter Teil des Körpers mit polygonem Querschnitt. Im Falle einer rotationssymmetrischen Freiform ist der erste Teil des Gehäuses ein erster Teil der rotationssymmetrischen Freiform und der zweite Teil des Gehäuses ist ein zweiter Teil der rotationssymmetrischen Freiform. Im Falle eines Prismas ist der erste Teil des Gehäuses ein erster Teil des Prismas und der zweite Teil des Gehäuses ist ein zweiter Teil des Prismas. Denkbar sind auch Mischformen zur Bildung des Gehäuses. So kann in einer weiteren Ausführungsform der erste Teil des Gehäuses ein Prisma sein und der zweite Teil des Gehäuses beispielsweise eine Halbkugel.

### Bezugszeichenliste

- 1: Mischkapsel
- 2: Gehäuse
- 3: erster Teil des Gehäuses
- 4: zweiter Teil des Gehäuses
- 5: erste Kammer
- 6: zweite Kammer
- 7: erste Austrittsöffnung
- 8: zweite Austrittsöffnung
- 9: erster Magnet
- 10: zweiter Magnet
- 11: erster Zylinder
- 12: zweiter Zylinder

## Patentansprüche

1. Mischkapsel (1) umfassend ein Gehäuse (2), **dadurch gekennzeichnet, dass** ein erster Teil des Gehäuses (3) gegen einen zweiten Teil des Gehäuses (4) drehbar um eine Rotationsachse gelagert ist, wobei die Rotationsachse der Längsachse des Gehäuses (4) entspricht, wobei der erste Teil des Gehäuses (3) mindestens eine erste Kammer (5) zur Aufnahme einer Zusammensetzung A umfasst, wobei der zweite Teil des Gehäuses (4) mindestens eine zweite Kammer (6) zur Aufnahme einer Zusammensetzung B umfasst, wobei die mindestens eine erste Kammer (5) und die mindestens eine zweite Kammer (6) initial jeweils verschlossen sind, wobei bei Rotation des ersten Teils des Gehäuses (3) gegen den zweiten Teil des Gehäuses (4) um einen vordefinierten Winkel eine erste Austrittsöffnung (7) der mindestens einen ersten Kammer (5) im Wesentlichen kongruent über einer zweiten Austrittsöffnung (8) der mindestens einen zweiten Kammer (6) steht, wobei die erste Austrittsöffnung (7) und/oder die zweite Austrittsöffnung (8) dazu ausgebildet ist, eine Überführung der Zusammensetzung A in die mindestens eine zweite Kammer (6) und/oder der Zusammensetzung B in die mindestens eine erste Kammer (5) zu ermöglichen, wobei bei im Wesentlichen kongruenter Stellung von der ersten Austrittsöffnung (7) mit der zweiten Austrittsöffnung (8) die mindestens eine erste Kammer (5) und die mindestens eine zweite Kammer (6) eine gemeinsame Mischkammer bilden, wobei in der gemeinsamen Mischkammer die Zusammensetzung A und die Zusammensetzung B mischbar zur Zusammensetzung C gelagert sind und durch Bewegung der Mischkapsel zur Zusammensetzung C vermischt werden, wobei in einer Lagerungs- und Transportphase die erste Austrittsöffnung (7) und die zweite Austrittsöffnung (8) nicht kongruent zueinander stehen,
**dadurch gekennzeichnet, dass** der erste Teil des Gehäuses (3) mindestens einen ersten Magnet (9) umfasst und der zweite Teil des Gehäuses (4) mindestens einen zweiten Magnet (10) umfasst, wobei der mindestens eine erste Magnet (9) und der mindestens eine zweite Magnet (10) bei kongruenter Stellung zueinander dazu ausgebildet sind, bei der kongruenten Stellung und/oder bei der nicht kongruenten Stellung von erster Austrittsöffnung (7) und zweiter Austrittsöffnung (8) den ersten Teil des Gehäuses (3) und den zweiten Teil des Gehäuses (4) zu dem Gehäuse (2) zusammenzuhalten.

2. Mischkapsel nach Anspruch 1, **dadurch gekennzeichnet, dass** der mindestens eine erste Magnet (9) und der mindestens eine zweite Magnet (10), insbesondere zur Ausbildung eines Permanentmagneten als Material Neodym umfassen.

3. Mischkapsel nach Anspruch 1 oder 2, **dadurch gekennzeichnet, dass** nach einer Trennung des ersten Teils des Gehäuses (3) vom zweiten Teil des Gehäuses (4) die mindestens eine erste Kammer (5) und/oder die mindestens eine zweite Kammer (6) dazu ausgebildet sind, die Zusammensetzung C aufzunehmen.

4. Mischkapsel nach einem der Ansprüche 1 bis 3, **dadurch gekennzeichnet, dass** die mindestens eine erste Kammer (5) und/oder die mindestens eine zweite Kammer (6) ein begrenztes Lumen umfassen.

5. Mischkapsel nach einem der Ansprüche 1 bis 4, **dadurch gekennzeichnet, dass** der vordefinierte Winkel der Rotation des ersten Teils des Gehäuses (3) gegen den zweiten Teil des Gehäuses (4), damit die erste Austrittsöffnung (7) der mindestens einen ersten Kammer (5) kongruent über der zweiten Austrittsöffnung (8) der mindestens einen zweiten Kammer (6) steht, ein Winkel zwischen 0 und 360 Grad ist, insbesondere 90 Grad, 180 Grad oder 270 Grad beträgt.

6. Mischkapsel nach Anspruch 5, **dadurch gekennzeichnet, dass** bei einer kongruenten Stellung von erster Austrittsöffnung (7) und zweiter Austrittsöffnung (8) die mindestens eine erste Kammer (5) und die mindestens eine zweite Kammer (6) kommunizierend miteinander in Verbindung stehen.

7. Mischkapsel nach einem der Ansprüche 1 bis 6, **dadurch gekennzeichnet, dass** der erste Teil des Gehäuses (3) an seiner dem zweiten Teil abgewandten Seite einen ersten Zylinder (11) und der zweite Teil des Gehäuses (4) an seiner dem ersten Teil abgewandten Seite einen zweiten Zylinder (12) aufweist.

8. Mischkapsel nach einem der Ansprüche 1 bis 7, **dadurch gekennzeichnet, dass** der erste Teil des Gehäuses (3) und/oder der zweite Teil des Gehäuses (4) aus einem opaken Material besteht.

9. Mischkapsel nach einem der Ansprüche 1 bis 8, **dadurch gekennzeichnet, dass** das Gehäuse der Mischkapsel Cycloolefinpolymer, Cycloolefin-Copolymer(e), Polyethylen, Polypropylen, Polyethylen mit geringer Dichte, Polyethylen mit hoher Dichte, Polypropylen mit geringer Dichte, Polypropylen mit hoher Dichte und/oder Mischungen enthaltend mindestens eines dieser Polymere umfasst.

10. Mischkapsel nach einem der Ansprüche 1 bis 9, **dadurch gekennzeichnet, dass** die Mischkapsel (1) einen Erstöffnungsschutz (13) aufweist, wobei der Erstöffnungsschutz (13) dazu ausgebildet ist, den ersten Teil des Gehäuses (3) gegen den zweiten Teil des Gehäuses (4) rotationsfrei zu fixieren.

11. Verfahren zum Mischen von mindestens zwei Zusammensetzungen A und B zu einer Zusammensetzung C in einer Mischkapsel (1) nach einem der Ansprüche 1 bis 10, **dadurch gekennzeichnet, dass** das Verfahren die Schritte umfasst:
(i) Drehen des ersten Teils des Gehäuses (3) gegen den zweiten Teil des Gehäuses (4), solange bis die erste Austrittsöffnung (7) der mindestens einen ersten Kammer (5) kongruent über der zweiten Austrittsöffnung (8) der mindestens einen zweiten Kammer (6) steht;
(ii) Mischen der Zusammensetzung A und der Zusammensetzung B in der gemeinsamen Mischkammer, indem die Mischkapsel bewegt wird;
(iii) Trennen des ersten Teils des Gehäuses (3) vom zweiten Teil des Gehäuses (4);
(iv) Erhalt der Zusammensetzung C in der ersten Kammer (5) und/oder in der zweiten Kammer (6).

12. Verfahren nach Anspruch 11, **dadurch gekennzeichnet, dass** das (iii) Mischen der Zusammensetzung A und der Zusammensetzung B in der gemeinsamen Mischkammer von einem Universalmischgerät für Dentalmaterialien durchgeführt wird.

13. Verwendung einer Mischkapsel (1) gemäß einem der Ansprüche 1 bis 10 zum Lagern, Mischen und Anwenden von pastösen bis knetbaren Zusammensetzungen, insbesondere dentalen Zwei-Komponenten Zusammensetzungen.

14. Kit umfassend eine Mischkapsel nach einem der Ansprüche 1 bis 10, umfassend eine Zusammensetzung A und eine Zusammensetzung B.

## Claims

1. Mixing capsule (1) comprising a housing (2), **characterised in that** a first part of the housing (3) is mounted rotatably about a rotational axis against a second part of the housing (4), the rotational axis corresponding to the longitudinal axis of the housing (2), the first part of the housing (3) comprising at least one first chamber (5) to receive a composition A, the second part of the housing (4) comprising at least one second chamber (6) to receive a composition B, the at least one first chamber (5) and the at least one second chamber (6) being initially closed respectively, a first outlet opening (7) of the at least one first chamber (5) standing substantially congruently above a second outlet opening (8) of the at least one second chamber (6) when the first part of the housing (3) being rotated about a predefined angle against the second part of the housing (4), the first outlet opening (7) and/or the second outlet opening (8) being adapted to allow transfer of composition A into the at least one second chamber (6) and/or of composition B into the at least one first chamber (5), the at least one first chamber (5) and the at least one second chamber (6) forming a common mixing chamber when the first outlet opening (7) with the second outlet opening (8) being in substantially congruent position, composition A and composition B being stored mixably to composition C in the common mixing chamber and being mixed to composition C by moving the mixing capsule, the first outlet opening (7) and the second outlet opening (8) not standing congruently to each other in a storing and transport phase, **characterized in that**
the first part of the housing (3) comprising at least one first magnet (9) and the second part of the housing (4) comprising at least one second magnet (10), the at least one first magnet (9) and the at least one second magnet (10) being adapted, when being in congruent position to each other, to keep together the first part of the housing (3) and the second part of the housing (4) to be the housing (2) when the first outlet opening (7) and the second outlet opening (8) being in congruent position and/or in non-congruent position.

2. Mixing capsule according to claim 1, **characterised in that** the at least one first magnet (9) and the at least one second magnet (10), in particular to form a permanent magnet, comprise neodymium as material.

3. Mixing capsule according to claim 1 or 2, **characterised in that**, after separating the first part of the housing (3) from the second part of the housing (4), the at least one first chamber (5) and/or the at least one second chamber (6) are adapted to receive composition C.

4. Mixing capsule according to any one of claims 1 to 3, **characterised in that** the at least one first chamber (5) and/or the at least one second chamber (6) comprise a limited lumen.

5. Mixing capsule according to any one of claims 1 to 4, **characterised in that** the predefined angle of the rotation of the first part of the housing (3) against the second part of the housing (4), in order to make the first outlet opening (7) of the at least one first chamber (5) standing congruently above the second outlet opening (8) of the at least one second chamber (6), is an angle between 0 and 360 degrees, in particular amounts to 90 degrees, 180 degrees or 270 degrees.

6. Mixing capsule according to claim 5, **characterised in that** the at least one first chamber (5) and the at least one second chamber (6) communicate with each other when the first outlet opening (7) and the second outlet opening (8) being in a congruent position.

7. Mixing capsule according to any one of claims 1 to 6, **characterised in that** the first part of the housing (3) has a first cylinder (11) at its side averting the second part and the second part of the housing (4) has a second cylinder (12) at its side averting the first part.

8. Mixing capsule according to any one of claims 1 to 7, **characterised in that** the first part of the housing (3) and/or the second part of the housing (4) are composed of an opaque material.

9. Mixing capsule according to any one of claims 1 to 8, **characterised in that** the housing of the mixing capsule comprises cyclic olefin polymer, cyclic olefin copolymer(s), polyethylene, polypropylene, polyethylene having low density, polyethylene having high density, polypropylene having low density, polypropylene having high density and/or mixtures containing at least one of said polymers.

10. Mixing capsule according to any one of claims 1 to 9, **characterised in that** the mixing capsule (1) has an initial opening protection (13), the initial opening protection (13) being adapted to fix the first part of the housing (3) in a rotation-free manner against the second part of the housing (4).

11. Method for mixing at least two compositions A and B to a composition C in a mixing capsule (1) according to any one of claims 1 to 10, **characterised in that** the method comprises the steps of:
(i) rotating the first part of the housing (3) against the second part of the housing (4), until the first outlet opening (7) of the at least one first chamber (5) stands congruently above the second outlet opening (8) of the at least one second chamber (6);
(ii) mixing composition A and composition B in the common mixing chamber by the mixing capsule being moved;
(iii) separating the first part of the housing (3) from the second part of the housing (4);
(iv) obtaining composition C in the first chamber (5) and/or in the second chamber (6).

12. Method according to claim 11, **characterised in that** (iii) mixing composition A and composition B in the common mixing chamber is realised by a universal mixing device for dental materials.

13. Use of a mixing capsule (1) according to any one of claims 1 to 10 for storing, mixing and applicating pasty to kneadable compositions, in particular dental two component compositions.

14. Kit comprising a mixing capsule according to any one of claims 1 to 10, comprising a composition A and a composition B.

## Revendications

1. Capsule de mélange (1) comprenant un boîtier (2), **caractérisée en ce qu'**une première partie de la boîtier (3) est montée rotatif autour d'une axe de rotation contre une deuxième partie du boîtier (4), l'axe de rotation correspondant à l'axe longitudinal du boîtier (2), la première partie du boîtier (3) comprenant au moins une première chambre (5) à recevoir une composition A, la deuxième partie du boîtier (4) comprenant au moins une deuxième chambre (6) à recevoir une composition B, l'au moins une première chambre (5) et l'au moins une deuxième chambre (6) sont fermées initialement respectivement, un premier orifice de sortie (7) de l'au moins une première chambre (5) étant debout de manière substantiellement congruent dessus une deuxième orifice de sortie (8) de l'au moins une deuxième chambre (6) lorsque la première partie du boîtier (3) étant tournée autour d'un angle prédéfini contre la deuxième partie du boîtier (4), le premier orifice de sortie (7) et/ou le deuxième orifice de sortie (8) étant adaptées à permettre un transfer de la composition A dans l'au moins une deuxième chambre (6) et/ou de la composition B dans l'au moins une première chambre (5), l'ai moins une première chambre (5) et l'au moins une deuxième chambre (6) formant un chambre de mélange commune lorsque le premier orifice de sortie (7) avec le deuxième orifice de sortie (8) étant dans une position substantiellement congruente, la composition A et la composition B étant stockées de manière mélangeable à la composition C dans la chambre de mélange commune et étant mélangées à la composition C par bouger la capsule de mélange, le premier orifice de sortie (7) et le deuxième orifice de sortie (8) n'étant pas debout de manière congruent l'un à l'autre dans une phase de stockage et de transport, **caractérisée en ce qu'**une la première partie du boîtier (3) comprenant au moins un premier aimant (9) et la deuxième partie du boîtier (4) comprenant au moins un deuxième aimant (10), l'au moins un premier aimant (9) et l'au moins un deuxième aimant (10) étant adaptés, lorsque étant dans une position congruente l'un à l'autre, à tenir ensemble la première partie du boîtier (3) et la deuxième partie du boîtier (4) à être le boîtier (2) lorsque le premier orifice de sortie (7) et le deuxième orifice de sortie (8) étant dans une position congruente et/ou dans une position non congruente.

2. Capsule de mélange selon la revendication 1, **caractérisée en ce que** l'au moins un premier aimant (9) et l'au moins un deuxième aimant (10), en particulier à former un aimant permanent, comprennent le néodyme comme matériau.

3. Capsule de mélange selon la revendication 1 ou 2, **caractérisée en ce que**, après séparer la première partie du boîtier (3) de la deuxième partie du boîtier (4), l'au moins une première chambre (5) et/ou l'au moins une deuxième chambre (6) est adaptée à recevoir la composition C.

4. Capsule de mélange selon l'une des revendications 1 à 3, **caractérisée en ce que** l'au moins une première chambre (5) et/ou l'au moins une deuxième chambre (6) comprend un lumen limité.

5. Capsule de mélange selon l'une des revendications 1 à 4, **caractérisée en ce que** l'angle prédéfini de la rotation de la première partie du boîtier (3) contre la deuxième partie du boîtier (4), afin de rendre le premier orifice de sortie (7) de l'au moins une première chambre (5) étant debout de manière congruente dessus le deuxième orifice de sortie (8) de l'au moins deuxième chambre (6), est un angle entre 0 et 360 degrés, en particulier s'élève à 90 degrés, 180 degrés ou 270 degrés.

6. Capsule de mélange selon la revendication 5, **caractérisée en ce que** l'au moins une première chambre (5) et l'au moins une deuxième chambre (6) communiquent l'une avec l'autre lorsque le premier orifice de sortie (7) et le deuxième orifice de sortie (8) étant dans une position congruente.

7. Capsule de mélange selon l'une des revendications 1 à 6, **caractérisée en ce que** la première partie du boîtier (3) a un premier cylindre (11) à sa côté détournant de la deuxième partie et la deuxième partie du boîtier (4) a un deuxième cylindre (12) à sa côté détournant de la première partie.

8. Capsule de mélange selon l'une des revendications 1 à 7, **caractérisée en ce que** la première partie du boîtier (3) et/ou la deuxième partie du boîtier (4) est composée d'un matériau opaque.

9. Capsule de mélange selon l'une des revendications 1 à 8, **caractérisée en ce que** le boîtier de la capsule de mélange comprend du polymère d'oléfine cyclique, copolymère(s) d'oléfine cyclique, polyéthylène, polypropylène, polyéthylène ayant basse densité, polyéthylène ayant haute densité, polypropylène ayant basse densité, polypropylène ayant haute densité et/ou des mélanges contenant au moins un desdits polymères.

10. Capsule de mélange selon l'une des revendications 1 à 9, **caractérisée en ce que** la capsule de mélange (1) a une protection d'ouverture initiale (13), la protection d'ouverture initiale (13) étant adaptée à fixer la première partie du boîtier (3) dans une manière non rotative contre la deuxième partie du boîtier (4).

11. Procédé pour mélanger au moins deux compositions A et B à une composition C dans une capsule de mélange (1) selon l'une des revendications 1 à 10, **caractérisé en ce que** le procédé comprend les étapes de :
(i) tourner la première partie du boîtier (3) contre la deuxième partie du boîtier (4), jusqu'à le premier orifice de sortie (7) de l'au moins une première chambre (5) est debout de manière congruente dessus le deuxième orifice de sortie (8) de l'au moins deuxième chambre (6) ;
(ii) mélanger la composition A et la composition B dans la chambre de mélange commune par la capsule de mélange étant bougée ;
(iii) séparer la première partie du boîtier (3) de la deuxième partie du boîtier (4) ;
(iv) obtenir la composition C dans la première chambre (5) et/ou dans la deuxième chambre (6).

12. Procédé selon la revendication 11, **caractérisé en ce que** (iii) mélanger la composition A et la composition B dans la chambre de mélange commune est réalisé par un dispositif de mélange universel pour des matériaux dentaires.

13. Utilisation d'une capsule de mélange (1) selon l'une des revendications 1 à 10 pour stocker, mélanger et appliquer des compositions pâteuses à pétrissable, en particulière des compositions dentaires à deux composants.

14. Kit comprenant une capsule de mélange selon l'une des revendications 1 à 10, comprenant une composition A et une composition B.
